# EUROPEAN PATENT APPLICATION

(11) **EP 4 838 627 A1**
(43) Date of publication of application: **11.11.2026**
(21) Application number: 25174556.8
(22) Date of filing: 06.05.2025
(51) Int. Cl.: H01M 10/647, H01M 10/6557, H01M 50/249, H01M 50/258, H01M 50/264, H01M 50/333, H01M 50/502

(54) **BATTERY SYSTEM AND ELECTRIC VEHICLE INCLUDING THE SAME**

(71) Applicant: SAMSUNG SDI CO., LTD., Yongin-si, Gyeonggi-do 17084 (KR)
(72) Inventor: Bloder, Martin, 8261 Sinabelkirchen (AT); Rabanser, Mike, 8010 Graz (AT)
(74) Representative: Gulde & Partner

(57) **Abstract**

The present disclosure refers to a battery system (100), including a plurality of battery cells (12) arranged to form a cell stack (10), a cell stack frame (20) accommodating the cell stack (10) and exerting a pressure onto the cell stack (10), a cooling structure (40) including a plurality of cooling plates (42) arranged between the battery cells (12), wherein each cooling plate (42) includes two plate elements (42a, 42b) with a cooling chamber (48) in-between for the feed-through of coolant, and a compression structure (50) arranged inside the cooling chamber (48), wherein the compression structure (50) includes one or more spring elements (52, 54) interconnecting the plate elements (42a, 42b), the spring elements (52, 54) having a corrugated shape, the spring elements (52, 54) being adapted to be elastically deformed when receiving compression forces acting on the plate elements (42a, 42b), and the compression structure (50) further including connection portions (56) connecting the spring elements (52, 54) to the plate elements (42a, 42b), the connection portions (56) being adapted to be plastically deformed when receiving compression forces acting on the plate elements (42a, 42b).

## Description

### Field of the Disclosure

Embodiments of the present disclosure relate to a battery system better suited to compensate age-related cell swelling. Further, the present disclosure relates to an electric vehicle including such a battery system.

### Technological Background

Recently, vehicles for transportation of goods and peoples have been developed that use electric power as a source for motion. An electric vehicle is an automobile that is propelled permanently or temporarily by an electric motor using energy stored in rechargeable batteries. The electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. Common battery cell formats, include, for example, cylindrical, prismatic, and pouch.

A battery module is formed of a plurality of battery cells connected together in series or in parallel. That is, the battery module is formed by interconnecting the electrode terminals of the plurality of battery cells depending on a desired amount of power and in order to realize a relatively high-power rechargeable battery.

Battery modules can be constructed either in a block design or in a modular design. In the block design each battery cell is coupled to a common current collector structure and a common cell management unit and accommodated in a housing. In the modular design, pluralities of battery cells are connected together to form submodules and several submodules are connected together to form the battery module. In automotive applications, battery systems may include a plurality of battery modules connected together in series to provide a desired voltage.

A battery pack is a set of any number of (for example identical) battery modules and/or single battery cells. The battery modules, or respectively the battery cells, may be configured in a series, parallel, or a mixture of both to provide the desired voltage, capacity, and/or power density. Components of a battery pack include the individual battery modules, and the interconnects, which provide electrical conductivity between the battery modules.

Mechanical integration of a battery pack is achieved by appropriate mechanical connections between the individual components, e.g., between the battery modules, and between them and a supporting structure of the vehicle. These connections should remain functional and save during the average service life of the battery system. Further, installation space and interchangeability specifications should be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. In some cases, the battery modules are confined by fastening side plates to lateral sides of the carrier framework. Further, cover plates may be fixed atop and below the battery modules.

The carrier framework of the battery pack is mounted to a carrying structure of the vehicle. When the battery pack is to be fixed at the bottom of the vehicle, the mechanical connection may be established from the bottom side by for example bolts passing through the carrier framework of the battery pack. The framework is generally made of aluminum or an aluminum alloy to reduce the overall weight of the construction.

A conventional battery system, despite any modular structure, usually includes a battery housing that acts as an enclosure to seal the battery system against the environment and provides structural protection of the battery system's components. Housed battery systems are usually mounted as a whole into their application environment, e.g. an electric vehicle. Thus, the replacement of defective system parts, e.g., a defective battery submodule, requires dismounting the entire battery system and removal of its housing first. Even defects of small and/or cheap system parts may require dismounting and replacement of the entire battery system and its separate repair. Because high-capacity battery systems are expensive, large, and heavy, the procedure is burdensome, and the storage, e.g., in the mechanic's workshop, of the bulky battery system is difficult.

As the location for the active and passive components of a battery system, the battery housing plays a decisive role in the functionality, safety, and service life of the energy storage system. It protects the sensitive components from harmful environmental influences such as water, moisture, and dust, and is therefore crucial for long-term safe and reliable operation. As traction batteries are typically located outside the vehicle cabin, usually in the floor area, the housing is directly exposed to extreme environmental conditions such as temperature, humidity, splash water, salt spray, dust, and stone chipping. High mechanical stability and corrosion resistance are therefore essential, even under aggressive external conditions. In addition to the environmental influences, which mainly affect the surface of the housing or the tightness of the housing, the internal and external fastening systems are of particular importance under vehicle operating conditions.

An active or passive thermal management system may be included to provide thermal control of the battery pack, to safely use the at least one battery module by efficiently emitting, discharging, and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting, discharging, and/or dissipating heat from the cells is important.

The effective management of thermal energy is essential for the optimal functioning and longevity of lithium-ion batteries in mobile applications. This is because the ability to regulate temperature is crucial for maintaining full performance and operational readiness in a wide range of conditions. Thermal management encompasses both cooling and heating operations. Given the considerable diversity of lithium-ion battery variants, characterized by differences in cell chemistry and structure, thermal management must be tailored to the specific requirements of each variant. A similar situation pertains to regard to the numerous different vehicle applications, which encompass a range of vehicles from small city cars to sports cars, as well as vehicles with mild hybridization and purely electric vehicles. Furthermore, integration into the vehicle's thermal circuits is of significant importance.

In the case of air cooling, cooling air flows around the cell, thereby cooling the freely accessible surfaces. As this type of cooling does not necessitate direct thermal contact with the cell, the interface to the cooling system is relatively straightforward. Nevertheless, the installation space required for the cooling air ducts between the cells is considerable, and the cooling effectiveness, e.g. the homogeneity of cell cooling, is often inadequate. In contrast, cooling methods that establish thermal contact with the cell and dissipate the heat via heat conduction are demonstrably more effective than air cooling in terms of cooling efficacy. Nevertheless, the design of the thermal contact presents a new set of challenges. The interface to the cooling system is more complex, as the cooling apparatus is in direct contact with the electrical components of the battery. In the case of cells with a low height and sufficiently thick cell walls, it is sufficient to simply make contact with the bottom of the cell via a cooling plate. Should this prove inadequate, supplementary heat conduction elements must be incorporated between the cells to facilitate the transfer of heat to the cooling plate. However, this results in a heavier and more expensive cooling system. The use of fluid-conducting cooling plates between the cells has been demonstrated to be an effective method, as the heat conduction path from the interior of the cell to the cooling fluid is relatively short, resulting in a high degree of temperature homogeneity within the cell. An alternative approach to cooling is arrester cooling. In this method, the interior of the cell is cooled directly via the electrodes. Pouch cells may be well-suited for this type of cooling, as they have flat and therefore relatively easy-to-contact terminals. The waste heat from the cells is directed into a cooling plate. There, either cooling water or an evaporating refrigerant absorbs the heat and dissipates it to the environment via the vehicle's cooling or refrigeration system.

Exothermic decomposition of cell components may lead to a so-called thermal runaway. Generally, a thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, the thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature the battery cell can transition into the thermal runaway. Generally, temperatures outside of the safe region on either the low or high side may lead to irreversible damage to the battery cell and therefore may possibly trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The battery cells of a battery pack may be arranged to form a cell stack by stacking the battery cells onto each other or arranging the battery cells in a row and placing the cell stack within a cell stack frame. Neighboring battery cells of such a cell stack may be distanced from one another via cell spacers. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack, possibly via an end spacer, with a rigid linear or progressive elastic pressure characteristic. A disadvantage of such a rigid linear or progressive elastic pressure characteristic may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such cell stack frames may not be able to ensure that the right amount of pressure is applied to the cell stack over its entire lifetime.

It may thus be an object of the present application to provide a battery system ensuring suitable pressure conditions as well as temperatures for optimal operation of the battery cells over their entire lifetime.

### Summary of Invention

The present disclosure is defined by the appended claims. The description that follows is subject to this limitation. Any disclosure lying outside the scope of the claims is only intended for illustrative as well as comparative purposes.

According to an embodiment, a battery system includes a plurality of battery cells arranged to form a cell stack, a cell stack frame accommodating the cell stack and exerting a pressure onto the cell stack, a cooling structure including a plurality of cooling plates arranged between the battery cells, wherein each cooling plate includes two plate elements with a cooling chamber in-between for the feed-through of coolant, and a compression structure arranged inside the cooling chamber, wherein the compression structure includes one or more spring elements interconnecting the plate elements, the spring elements having a corrugated shape, the spring elements being adapted to be elastically deformed when receiving compression forces acting on the plate elements, and the compression structure further including connection portions connecting the spring elements to the plate elements, the connection portions being adapted to be plastically deformed when receiving compression forces acting on the plate elements.

According to an embodiment, the cooling structure further includes curved connecting elements extending about end sides of the battery cells and interconnecting neighboring cooling plates of the plurality of cooling plates such that the cooling structure has a meandering form.

According to an embodiment, the cell stack frame includes an end plate exerting pressure onto the cell stack.

According to an embodiment, the cooling structure further includes a fluid inlet element arranged at a first end of the cell stack and a fluid outlet element arranged a second end of the cell stack, wherein the cooling structure is adapted for the feed-through of the coolant from the fluid inlet element, through the cooling chambers of the cooling plates and out of the fluid outlet element.

According to an embodiment, the cooling plates are extruded plates and/or the cooling plates are made of aluminum.

According to an embodiment, the spring elements include V-shaped springs interconnecting the plate elements, the V-shaped springs each including two legs with a corrugated shape, the legs being adapted to be elastically deformed when receiving compression forces acting on the plate elements, wherein the connection portions connect the legs to the plate elements.

According to an embodiment, the V-shaped springs are arranged one after the other in the same orientation.

According to an embodiment, the V-shaped springs are arranged in pairs of two with their open ends against each other.

According to an embodiment, the corrugated shape of the V-shaped springs is configured such that when the cooling plate is fully compressed, the two legs of the V-shaped springs are nested inside each other while cooling channels through the cooling chamber are partially maintained inside the compressed cooling plate.

According to an embodiment, the spring elements include a spring plate having a corrugated shape, wherein a main extension plane of the spring plate extends substantially parallel to the plate elements.

According to an embodiment, the plate elements are configured to be bulged outwards in a relaxed state and flattened in a compressed state to homogenize the pressure of the plate elements onto adjacent battery cells.

According to an embodiment, an electric vehicle includes the battery system.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a perspective view of a battery system according to an embodiment.
FIG. 2 illustrates a top view of the battery system of FIG. 1.
FIG. 3 illustrates a perspective view of the battery system of FIG. 1 with one of the end plates removed.
FIG. 4 illustrates a meandering cooling structure of the battery system of FIG. 1.
FIG. 5A to 5D illustrate a cross-section of a cooling plate of the cooling structure and a detail A of this cooling plate in three different stages of compression with a compression structure according to a first embodiment.
FIG. 6A to 6D illustrate a cross-section of a cooling plate of the cooling structure and a detail A of this cooling plate in three different stages of compression with a compression structure according to a second embodiment.
FIG. 7A to 7D illustrate a cross-section of a cooling plate of the cooling structure and a detail A of this cooling plate in three different stages of compression with a compression structure according to a third embodiment.
FIG. 8 illustrates a diagram showing a force to elongation (stack length) ratio for the battery systems according to the disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The term "consisting essentially of" means that specific further components can be present, namely those not materially affecting the essential characteristics of a composition.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row. The cell stack may form one or more battery packs. The cell stack is disposed inside a cell stack frame. The cell stack frame exerts a pressure onto the cell stack. For example, the cell stack frame may include at least one end plate that exerts such a pressure. The cell stack frame may include two end plates and two side walls connecting the end plates, wherein one or both of the end plates may exert a pressure onto the cell stack. The cell stack arranged inside the cell stack frame may thus be delimited from four sides by the end plates and side walls. The cell stack frame may further include a top cover and a bottom cover such that the cell stack may be delimited from all six sides. The at least one end plate may be fixed to the side walls (and/or the top cover and bottom cover), for example riveted or screwed. The at least one end plate may be rigid, i.e. non-deformable. The cell stack frame may delimit the cell stack to an outside, i.e. to an environment of the cell stack. The at least one end plate may form an outer delimitation of the cell stack frame. Also, the other end plate and/or the side walls may form the outer delimitation of the cell stack frame. In other words, the cell stack frame, e.g. the two end plates and two side walls, may delimit an interior space of the cell stack frame from the exterior, wherein in the interior space the cell stack is arranged.

The battery system further includes a cooling structure. The cooling structure includes multiple cooling plates and is adapted to cool the battery cells via these cooling plates. The cooling plates are arranged along the stacking direction, same as the battery cells, wherein for example between each pair of battery cells one of the cooling plates is arranged. In other words, a single battery cell may be disposed in-between two cooling plates. That is, the cooling plates and battery cells may be arranged alternatingly in a one-to-one-relationship. The cooling plates may thus form cell spacers distancing neighboring battery cells from each other. In another example, the cooling plates may be arranged such that, along the stacking direction, a cooling plate is provided every other/second battery cell. In other words, two battery cells may be disposed in-between two cooling plates. In another example, three or more battery cells may be disposed in-between two cooling plates. The cooling plates may be considered to form part of the cell stack and are compressed by the cell stack frame along with the battery cells. In other words, the cell stack frame exerts a pressure not only onto the battery cells but also onto the cooling plates disposed in-between the battery cells. Each cooling plate includes two plate elements. A first plate element of the two plate elements may face and contact a first battery cell of the plurality of battery cells and a second plate element of the two plate elements may face and contact a second battery cell of the plurality of battery cells. Each cooling plate has a cooling chamber through which a coolant, i.e. a cooling fluid, may be fed-through, e.g. pumped through, to cool the cooling plate and thus the adjacent battery cells during regular operation of the battery system. The cooling structure may thus ensure that the battery cells are kept within a required or intended temperature range for regular operation.

Further, according to the disclosure, the cooling plates each include a compression structure disposed inside the cooling chamber. The compression structure is adapted to deform based on an external pressure or force acting on the two plate elements. The cooling plates are therefore deformable. The compression structure includes one or more spring elements that interconnect the plate elements. Each of the spring elements has a corrugated shape. In other words, the spring elements have a wrinkled or creased shape. Again, in other words, the spring elements meander or have a meandering form. This is to flatten/weaken the spring characteristic of the springs. The spring elements are adapted/configured/designed to be elastically deformed when receiving compression forces acting on the plate elements. Further, the compression structure includes connection portions which connect the spring elements to the plate elements. The connection portions are adapted to be plastically deformed when receiving compression forces acting on the plate elements.

According to the disclosure, the compression structure is designed such that it is both elastically and plastically deformed when receiving compression forces acting on the plate elements of the cooling plate. That is, the compression structure - and therefore the cooling plate - is elastically and plastically deformable or adapted to be elastically and plastically deformed. The compression structure is elastically deformable due to the spring elements having a corrugated shape. The elastic deformation effectively compensates for cell breathing, i.e. for the variation in battery cell thickness due to charging and discharging of the battery cells. In other words, the spring elements have a corrugated shape to be elastically deformed by cell breathing of the battery cells. The compression structure is plastically deformable due to the connection portions, e.g. at least within an operational pressure range of the battery cells. That is, in the connection portions the bending stress is highest such that plastic deformation occurs therein. This way the battery system may compensate for cell thickness tolerances. In other words, the cooling plate includes the connection portions between the spring elements and the outer plates to be plastically deformed to compensate for cell thickness tolerances within an operational pressure range of the battery cells. Such cell thickness tolerances may occur due to cell ageing.

Thus, the cooling plate has, due to the compression structure, an elastic-plastic deformation characteristic. In other words, the compression structure is designed such that when the cell stack is exerted to an increasing compression force, e.g. due to cell breathing and an aging-related expansion of the battery cells, the cooling plates will deform elastically and plastically, respectively, at least within a pre-defined operational pressure range of the battery cells. That is, the battery cells of the cell stack receive a pre-tension by the cell stack frame, e.g. by an end plate of the cell stack frame pressing onto the cell stack, as explained above. The battery cells are thus under an operational pressure which should be kept within a pre-defined range, depending e.g. on the type, size and geometry of the battery cells, to ensure the intended operation of the battery cells. During charging and over their lifetime, however, the battery cells may swell up due to aging effects, as mentioned introductorily, which - in known designs of battery systems - may increase the pressure inside the cell stack.

With the battery system according to the disclosure, however, this swelling of the battery cells is compensated at least in part by the elastically and plastically deformable compression structure. That is, while the battery cells swell up and thus increase in thickness, the cooling plates are compressed and thus decrease in thickness, for example by the same amount or almost the same amount as the battery cells are increasing in thickness. During this compression, the cooling plates exert a constant or merely a slightly increasing pressure onto the battery cells over the entire compression range. That is, the compression structure is shaped or designed such that, in the designed compression/deformation range, it does not allow for a direct load transfer between the plate elements. In other words, although the battery cells may swell up, the pressure inside the cell stack frame may remain substantially unchanged or at least within an ideal pressure range for cell operation. This results in a merely slight linear increasing force acting on the battery cells over a large range of compression distance/thickness reduction of the cooling plates and thus over a large range of age-related varying stack length of the cell stack. Thereby the cell stack may be safely kept within the ideal cell stack pre-tension range over its lifetime. In other words, the compression structure provides the battery system with a deformation characteristic which results in very similar compression forces independent of the cell stacks length deviations caused by production tolerances and/or swelling of the battery cells. In other words, the cell stack frame, due to the deformable cooling plates, may exert a compression force onto the cell stack in the relevant, advantageous pre-tensioning force range for prismatic or pouch type cells. Thereby the spring elements may provide for the elastic deformation which compensates thickness increase due to cell breathing (which may be of a smaller extent in thickness increase) while the connection portions may provide for the plastic deformation which compensates thickness increase due to cell ageing (which may be of a larger extent in thickness increase). Inevitable tolerances for both the elements of the cell stack as well as the elements of the cell stack frame can be compensated by the inherent deformation ability of the cooling plates. This may eliminate the need of additional shimming or other adjustment work during cell stacking. Further, any swelling (which may e.g. be due to ageing) of the battery cells of the cell stack may also be compensated. Further, as the compression structure is integrated into the cooling plates, the installation space is efficiently used as the cooling plates fulfill a double function of cooling the battery cells and of a deformable cell spacer. Compared to compression structures which only or mainly deform plastically, the present steep compression structures may prevent a steep elastic deformation at the beginning of the compression and at a later decompression which is achieved by the corrugated spring elements which flatten/weaken the spring characteristic.

According to one embodiment, the cooling structure further includes curved connecting elements extending about end sides of the battery cells and interconnecting neighboring cooling plates of the plurality of cooling plates such that the cooling structure has a meandering form. In other words, the cooling plates of the cooling structure may form, together with the connecting elements, a continuous passage or channel for the coolant through the battery system. Therein, the coolant may flow from an inlet through the cooling plates and connecting elements to an outlet. As mentioned above, the cooling plates and battery cells are alternatingly arranged. Two neighboring cooling plates along with its interconnecting connecting element may thus form a meander inside of which one battery cell of the plurality of battery cells may be arranged. The compression structure may extend through the cooling plates only or also through the connecting elements. Such a meandering cooling structure may provide for a simple construction, for efficient cooling and - due to the compression structures - for the intended deformation characteristic.

As mentioned above, the cell stack frame may include an end plate exerting pressure onto the cell stack. According to an embodiment, the end plate is shaped, at an inner side thereof facing and outermost one of the cooling plates, correspondingly to an adjacent side of the outermost cooling plate. For example, the end plate may be shaped correspondingly to an adjacent side of the cooling plate including the fluid inlet or the fluid outlet. Correspondingly may mean that the inner side of the end plate has a shape that corresponds to the shape of an outer surface of the outermost cooling plate such that a full-surface contact may be achieved between the end plate and the outermost cooling plate. The end plate may include a through-hole adapted to receive the fluid inlet or fluid outlet such that the fluid inlet or fluid outlet may extend through the end plate. The end plate being formed correspondingly to the cooling plate may allow for an efficient transfer of compression force or pressure from the end plate onto the outermost cooling plate and thus onto the cell stack.

According to an embodiment, the cooling structure further includes a fluid inlet element arranged at a first end of the cell stack and a fluid outlet element arranged at a second end of the cell stack, wherein the cooling structure is adapted for the feed-through of the coolant from the fluid inlet element, through the cooling chambers of the cooling plates and out of the fluid outlet element. This embodiment may be suitable for the meandering cooling structure explained above, wherein then the cooling structure may be adapted for the feed-through of the coolant from the fluid inlet element, through the cooling chambers of the cooling plates and through the connecting elements and out of the fluid outlet element. The coolant may thus flow in series through the cooling plates. In other words, a single coolant flow is achieved through the whole cell stack. Alternatively, the cooling structure may include distribution channels extending along the stacking direction at the end side of the battery cells and connected to each of the cooling plates such that the coolant may flow parallel through the cooling plates. An outermost cooling plate of the plurality of cooling plates may include the fluid inlet and/or the fluid outlet. For example, a first outermost cooling plate at a first end of the cell stack may form the fluid inlet element and/or a second outermost cooling plate at a second end of the cell stack may form the fluid outlet element. Such a design of the cooling structure may provide for a simple design and effective cooling and deformation.

According to an embodiment, the cooling plates are extruded plates. That is, the cooling plates including the compression structure may be formed by an extrusion process. The whole cooling structure may be formed via an extrusion process. The cooling plates including the compression structure or the whole cooling structure may be made of aluminum. For example, if the cooling plates are formed by an extrusion process, the cooling plates or the whole cooling structure may be formed by aluminum extrusion. Producing the cooling plates, or the whole cooling structure including the cooling plates and the connecting elements (if present), as extrusion profiles is simple and efficient. The elements of the compression structure, such as cooling elements forming cooling channels inside the cooling chamber, may be formed in a constructively simple manner via extrusion. Also, such extrusion profiles provide for a stable construction while requiring a relatively small amount of material. Further, the cooling plates and the compression structures therein may be formed in a single production step.

According to an embodiment, the spring elements include V-shaped springs that interconnect the plate elements. Each of the V-shaped springs has two legs which have a corrugated shape. In other words, the legs have a wrinkled or creased shape. Again, in other words, the legs of the V-shaped springs meander or have a meandering form. This is to flatten/weaken the spring characteristic of the springs, as explained above. The legs are adapted/configured/designed to be elastically deformed when receiving compression forces acting on the plate elements. In this embodiment, the connection portions of the compression structure connect the legs to the plate elements. As explained, the connection portions are adapted to be plastically deformed when receiving compression forces acting on the plate elements. In this embodiment, the compression structure is elastically deformable due to the V-shaped springs with legs having a corrugated shape. That is, the V-shaped springs each include two legs with a corrugated shape to be elastically deformed by cell breathing of the battery cells. The compression structure is plastically deformable due to the connection portions, e.g. at least within an operational pressure range of the battery cells. That is, in these ends of the V-shaped springs that form the connection portions the bending stress is highest such that plastic deformation occurs therein. This way the battery system may compensate for cell thickness tolerances. In other words, the liquid cooling plate may include the connection portions between the two legs and/or between the legs and the outer plates to be plastically deformed to compensate for cell thickness tolerances within an operational pressure range of the battery cells. Thus, intended elastic-plastic deformation characteristic as explained above may be achieved in a simple and reliable manner.

According to an embodiment, the V-shaped springs are arranged one after the other in the same orientation. In other words, the V-shaped springs are aligned such that they point in the same direction. This may provide in a constructively simple manner for the intended deformation characteristic.

According to an embodiment, the V-shaped springs are arranged in pairs of two with their open ends against each other. In other words, the two V-shaped springs of each pair point in opposite directions. This may provide in a constructively simple manner for the intended deformation characteristic, may in particular provide for a more even pressure distribution than the V-shaped springs pointing in the same direction.

According to an embodiment, the corrugated shape of the V-shaped springs is configured such that when the cooling plate is fully compressed, the two legs of the V-shaped springs are nested inside each other while cooling channels through the cooling chamber are partially maintained inside the compressed cooling plate. In other words, the legs may have corrugated shapes that correspond to each other so that a protrusion of one of the legs protrudes into a receptacle of the other one of the legs. This allows for a high compression of the cooling plates albeit the compression structure so that the intended deformation characteristic may be achieved over a wide compression force.

According to an embodiment, the spring element(s) include a spring plate having a corrugated shape. The spring plate may extend in the same plane as the plate elements of the cooling plate. In other words, a main extension plane of the spring plate extends substantially parallel to the plate elements. Thus, as a compression structure, the corrugated spring plate may extend in-between the plate elements and may be connected to the plate elements at opposite sides via the connection portions. For example, the corrugated spring plate may be connected to the plate elements alternating between one side and the other. Such a compression structure may be of a simple design/construction while providing the intended elastic-plastic deformation characteristic.

According to an embodiment, the plate elements are configured to be bulged outwards in a relaxed state and flattened in a compressed state to homogenize the pressure of the plate elements onto adjacent battery cells. In other words, the plate elements are pre-tensioned against the compression force by having a bulged out form. This may overcome an uneven pressure distribution along a vertical axis of the cooling plate, with peak pressures where the connection portions contact the plate elements and lower pressures in between.

The disclosure also pertains to an electric vehicle including a battery system according to the disclosure, i.e. a battery system as explained above.

### Specific Embodiments

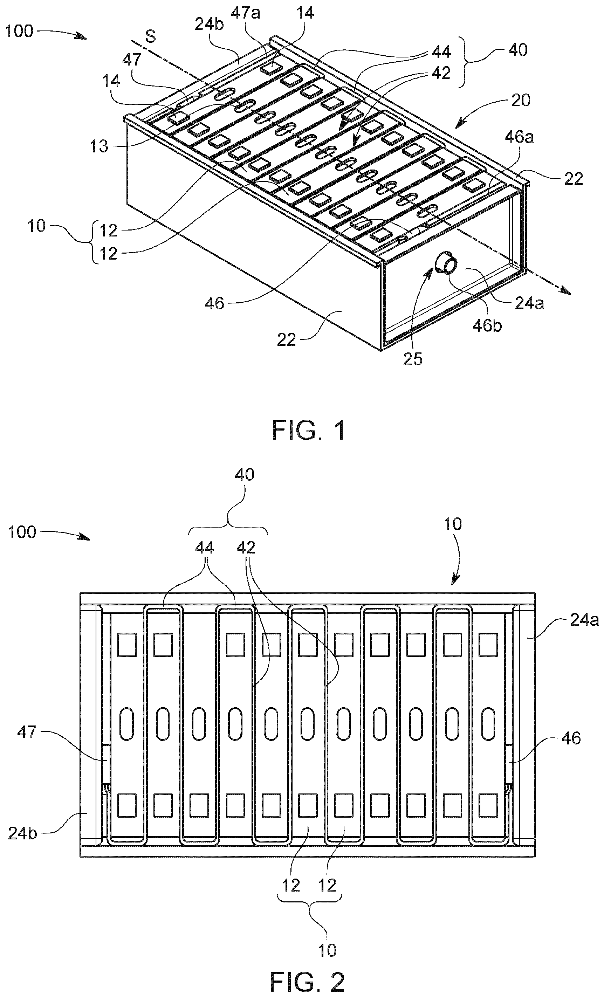

FIG. 1 to 3 illustrate a battery system 100 according to a first embodiment of the disclosure. The battery system 100 includes a plurality of prismatic battery cells 12 which are stacked along a stacking direction S so as to form a cell stack 10. The battery cells 12 may instead, for example, be pouch-type battery cells. Each of the battery cells 12, at a top side thereof, optionally includes cell terminals 14 for electrical interconnection and a venting opening 13 for allowing gas and particles to exit the respective battery cell 12 during a thermal runaway.

The battery system 100 further includes a cell stack frame 20 which accommodates the cell stack 10. The cell stack frame 20 includes side wall elements 22 disposed parallel to the stacking direction S, a first end plate 24a disposed at a first end of the cell stack 10 and a second end plate 24b disposed at a second end of the cell stack 10. The end plates 24a, 24b exert a pressure onto the cell stack 10 along the axis of the stacking direction S thereby compressing the cell stack 10.

Further, the battery system 100 includes a cooling structure 40 including a plurality of cooling plates 42 each arranged between adjacent battery cells 12 of the plurality of battery cells 12. In other words, the battery cells 12 and cooling plates 42 are alternately arranged. The cooling structure 40 further includes curved connecting elements 44 extending about lateral ends of the battery cells 12 and interconnecting neighboring cooling plates 42 such that the cooling structure 40 has a meandering form. In other words, the cooling structure 40 includes multiple meanders, each meander formed by two cooling plates 42 and the connecting element 44 connecting these two cooling plates 42, wherein inside each meander one of the battery cells 12 is located.

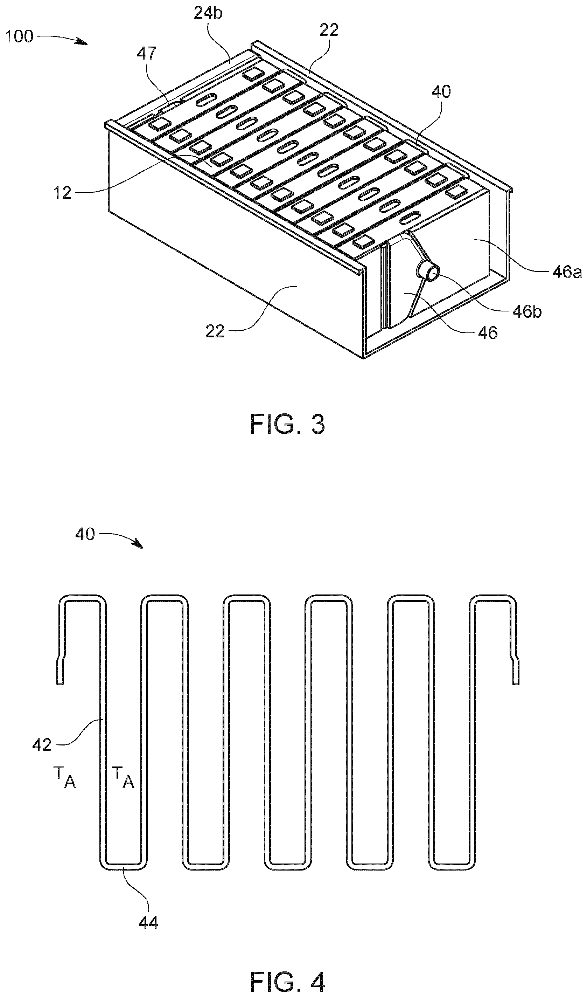

The cooling structure 40 further includes a fluid inlet element 46 arranged at the first end of the cell stack 10 and a fluid outlet element 47 arranged the second end of the cell stack 10. FIG. 3 shows the battery system 100 without the first end plate 24a and thus allows a view on the fluid inlet element 46. As shown, the fluid inlet element 46 is plate-shaped and includes a distancing portion 46a filling the gap between the outermost battery cell 12 and the first end plate 24a. The fluid outlet element 47 may also include a respective distancing portion 47a. The first end plate 24a is shaped, at an inner side thereof facing the fluid inlet element 46 (which may be understood as forming an outermost cooling plate), correspondingly to an adjacent side of the fluid inlet element 46. That is, the first end plate 24a flatly abuts the fluid inlet element 46 so as to provide a full contact over the entire surface area the fluid inlet element 46 which improves transfer of the compression force/pressure onto the fluid inlet element 46. The first end plate 24a includes a through-hole 25 through which an inlet 46b of the fluid inlet element 46 extends. Similarly, the second end plate 24b may include a through-hole through which an outlet of the fluid outlet element 47.

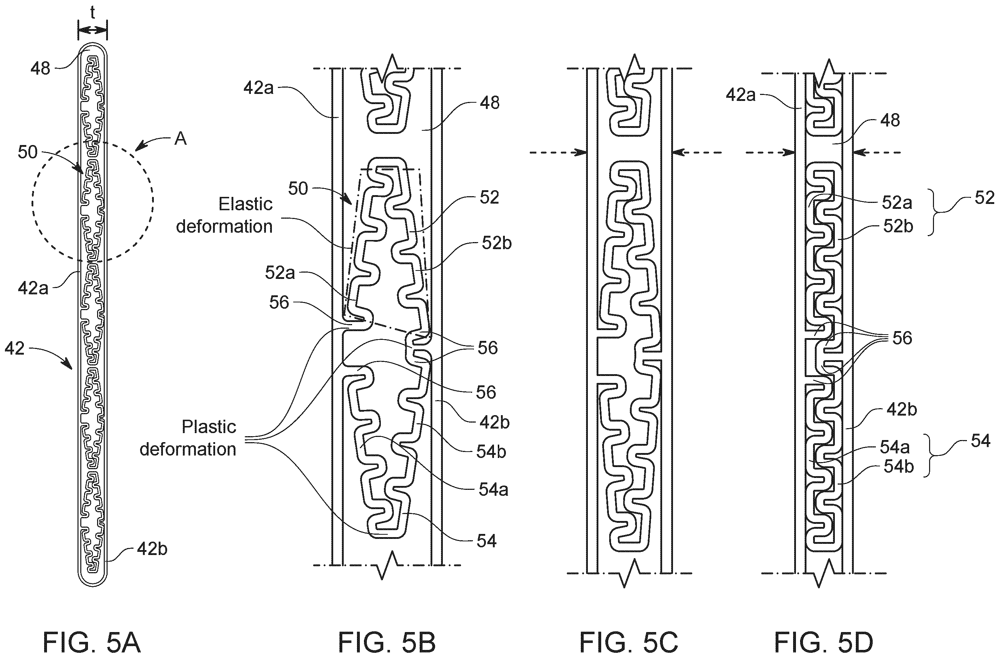

The cooling plates 42 each include two plate elements 42a, 42b with a cooling chamber 48 formed in-between for the feed-through of coolant, see for example FIG. 5. The cooling structure 40 is adapted for the feed-through of coolant from the fluid inlet element 46, through the cooling chambers 48 formed inside the cooling plates 42 and through the connecting elements 44, and out of the fluid outlet element 47. The coolant flow may be reversed, i.e. the fluid inlet element 46 may instead be the fluid outlet element and the fluid outlet element 47 may instead be the fluid inlet element. Thus, during regular operation of the battery system 100, coolant may flow through the meandering cooling structure 40 thereby cooling the battery cells 12 as these transfer heat to the cooling plates 42. The cooling plates 42 may therefore have a substantially full-surface contact to the adjacent battery cells 12 so that heat transfer is facilitated.

According to the disclosure, each of the cooling plates 42 further includes a compression structure 50 arranged inside the cooling chamber 48, see FIG. 5A. The compression structure 50 includes spring elements, which in the embodiment of FIG. 5A are V-shaped springs 52, 54 interconnecting the plate elements 42a, 42b. The V-shaped springs 52, 54 each include two legs 52a, 52b, 54a, 54b having a corrugated shape. The legs 52a, 52b, 54a, 54b and thus the V-shaped springs 52, 54 are adapted to be elastically deformed when receiving compression forces acting on the plate elements 42a, 42b. Further, the compression structure 50 includes connection portions 56 connecting the legs 52a, 52b, 54a, 54b to the plate elements 42a, 42b. The connection portions 56 may be formed by ends of the legs 52a, 52b, 54a, 54b. The connection portions 56 are adapted to be plastically deformed when receiving compression forces acting on the plate elements 42a, 42b. The V-shaped springs 52, 54 form cooling channels through which the coolant may flow through the cooling chamber 48. That is, the compression structure 50 does not hinder the flow of the coolant through the cooling chamber 48. As can be seen in FIG. 5A, the V-shaped springs 52, 54 are arranged in pairs of two with their open ends against each other.

The compression structure 50 is designed such that it is elastically and plastically deformed when receiving compression forces acting on the plate elements 42a, 42b of the cooling plate 42. That is, the V-shaped springs 52, 54 and the connection portions 56 are deformable in reaction to a compression force or pressure which is indicated in FIGS. 5C and 5D via dashed arrows. In FIG. 5A, the cooling plate 42 is shown in a cross-section in a non-compressed state. FIGS. 5B, 5C and 5D show a detail A of FIG. 5A. As can be seen in FIG. 5B, the V-shaped springs 52, 54 and connection portions 56 are in a non-compressed state. In FIG. 5C, the cooling plate 42 is shown in a state where a first compression force acts on the cooling plate 42 compressing the same as indicated by the dashed arrows. This results in a deformation of the compression structure 50. Specifically, the V-shaped springs 52, 54 are deformed elastically such that their legs 52a, 52b and 54a, 54b come closer to each other. The connection portions 56 are deformed plastically. Thus, a thickness t of the cooling plate 42 is reduced. In FIG. 5D, the cooling plate 42 is shown in a state where a second compression force acts upon the cooling plate 42, the second compression force being higher than the first compression force. The cooling plate 42 is thus compressed even further such that the legs 52a, 52b of the V-shaped spring 52 are nested inside each other and the legs 54a, 54b of the V-shaped spring 54 are nested inside each other. Nevertheless, cooling channels in-between the legs 52a, 52b and legs 54a, 54b as well as between subsequent pairs of V-shaped springs 52, 54 are at least partially maintained allowing for continued flow of coolant. Thus, the thickness t of the cooling plate 42 is further reduced.

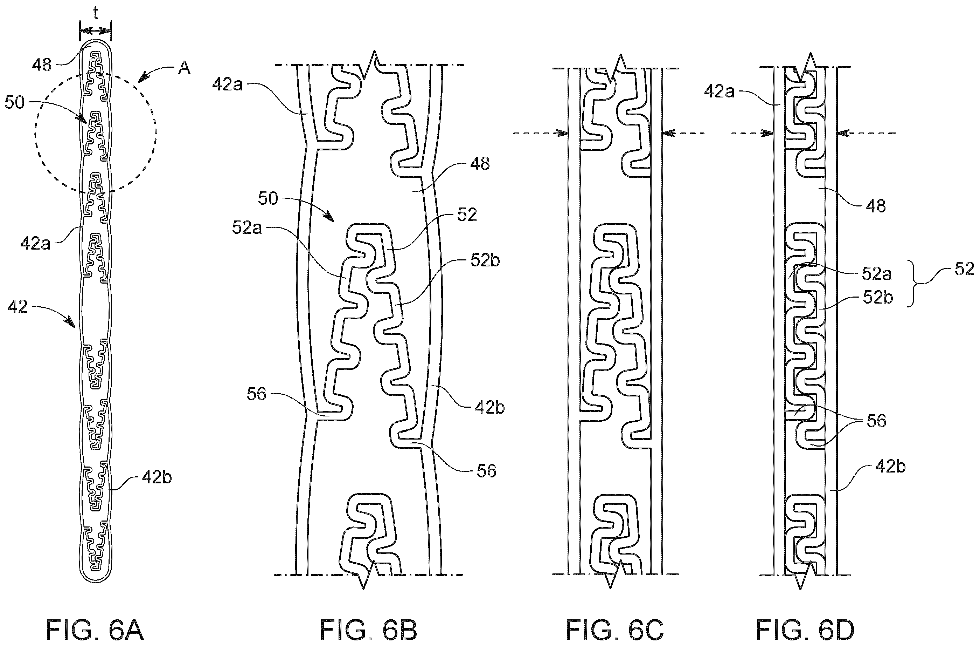

The embodiment of FIG. 6A differs from the embodiment of FIG. 5A only in that the V-shaped springs 52 are arranged one after the other in the same orientation, i.e. pointing in the same direction (upwards in FIG. 6A) and in that the plate elements 42a, 42b are bulged outwards in a relaxed, non-compressed state (see FIGS. 6A and 6B) and flattened in a compressed state (see FIGS. 6C and 6D). As in the previous embodiment, three states of varying compression are shown, from non-compressed of FIG. 6B to most compressed of FIG. 6D. The bulged out form homogenizes the pressure of the plate elements 42a, 42b onto adjacent battery cells 12. In other words, this may overcome an uneven pressure distribution along a vertical axis of the cooling plate 42, with peak pressures where the connection portions 56 contact the plate elements 42a, 42b and lower pressures in between.

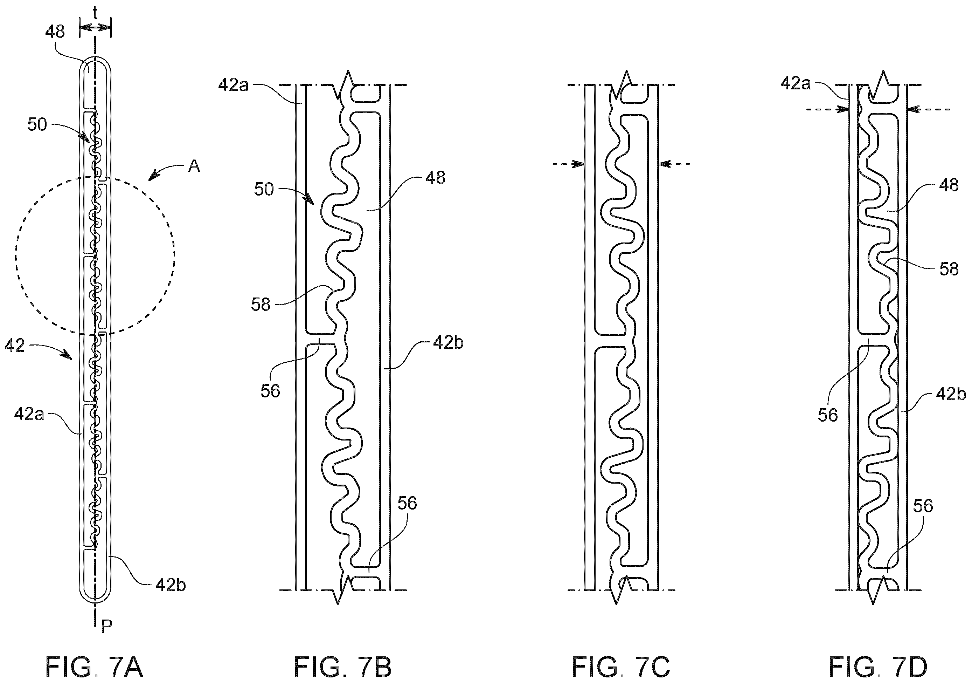

In the embodiment of FIGS. 7A to 7D, a spring plate 58 is provided as a spring element, the spring plate 58 having a corrugated shape. As shown, a main extension plane P of the spring plate 58 extends substantially parallel to the plate elements 42a, 42b. Thus, as a compression structure 50, the corrugated spring plate 58 may extend in-between the plate elements and may be connected to the plate elements 42a, 42b at opposite sides via the connection portions 56. As shown, the corrugated spring plate 58 may be connected to the plate elements 42a, 42b alternating between one side and the other. Such a corrugated spring plate 58 may be of a simple design/construction while providing the intended elastic-plastic deformation characteristic.

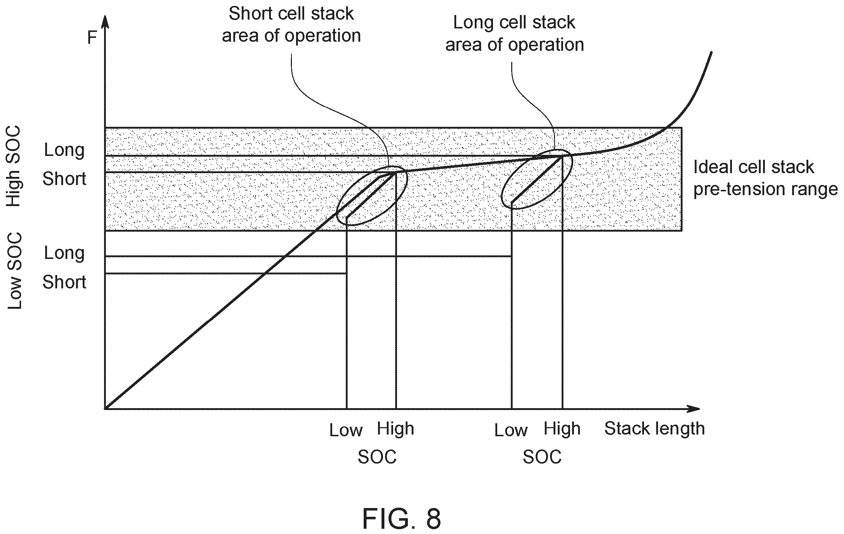

In all the above-described embodiments, the compression structure 50 is designed such that it is elastically and plastically deformed when receiving compression forces acting on the plate elements 42a, 42b of the cooling plate 42. That is, the compression structure 50 - and therefore the cooling plate 42 - is elastically and plastically deformable at least within an operational pressure range of the battery cells. In other words, the cooling plate has, due to the compression structure, an elastic-plastic deformation characteristic. This is shown in FIG. 8. The cooling structure 40 including the cooling plates 42, the connecting elements 44 and the compression structure 50 inside the cooling plates 42 may be formed via extrusion, may for example be aluminum extrusion profiles. The compression structures 50, in the designed compression/deformation range, do not allow for a direct load transfer between the plate elements 42a, 42b (until in an extreme position the legs 52a, 52b and the legs 54a, 54b lie flat against each other or the spring plate 58 contact the plate elements 42a, 42b directly).

Generally, the battery cells 12 of the cell stack 10 receive a pre-tension by the end plates 24a, 24b as mentioned above. The battery cells 12 are thus under an operational pressure which should be kept within a pre-defined range, depending e.g. on the type, size and geometry of the battery cells, to ensure the intended operation of the battery cells 12. The battery cells 12, however, swell up and shrink when charging and discharging, respectively, which is known as cell breathing. Further, over their lifetime the battery cells 12 may irreversibly swell up due to aging effects which - in known designs of battery systems - may increase the pressure inside the cell stack. With the battery system 100 according to the disclosure, however, this swelling of the battery cells 12 is compensated at least in part by the plastically deformable compression structure 50. That is, while the battery cells 12 swell up and thus increase in thickness, the cooling plates 42 are compressed and thus decrease in thickness.

During this compression, the cooling plates 42 exert not a steeply increasing pressure onto the battery cells (as with known cell spacers having a progressive deformation characteristic) but substantially the same or a merely slightly increasing pressure over the entire compression range as shown in FIG. 8. That is, the compression structure 50 is shaped or designed - due to the corrugated shape - such that, in the designed compression/deformation range, it does not allow for a direct load transfer between the plate elements 42a, 42b.

FIG. 8 illustrates a diagram showing a force F to elongation (cell stack length) ratio for the cooling plate 42 including the compression structure 50. The diagram shows encircled the behavior of two cell stacks of different length dependent on their SOC (state of charge). The short cell stack may be a newly manufactured cell stack while the long cell stack may be the same cell stack having aged due to multiple charging-discharging-cycles. As explained previously, battery cells expand when ageing. As shown, in case of both the short cell stack and the long cell stack, during cell breathing (i.e. between low SOC and high SOC) the exerted force F slightly increases linearly (=elastic deformation) with the elongation of the battery cells 12 (and thus cell stack length) but stays within a window or range of an ideal cell stack pre-tension. This elastic deformation is achieved by the corrugated spring elements, i.e. the V-shaped springs 52, 54 due to their two legs 52a, 52b, 54a, 54b having a corrugated shape or the spring plate 58 having a corrugated shape. As shown in the Figure, the long cell stack area of operation, while being farther on the elongation/stack length axis, is only slightly higher on the force axis meaning that a plastic deformation characteristic is achieved. The compression force (and thus the pressure) therefore stays within the window or range of an ideal cell stack pre-tension even when the battery cells 12 swell-up due to ageing.

Further, at even higher elongation, the exerted force F increases progressively. That is, while the compression structure 50 may not allow for a direct load transfer between the plate elements 42a, 42b in the designed compression/deformation range, when the cooling structure 40 is compressed beyond its intended deformation, the compression structure 50 gets compressed, drastically altering the compression forces load path. The compression force F can then travel almost straight from one side to the other, i.e. from one plate element 42a to the other plate element 42b, which leads to a stiffening of the compression structure 50 and prevents the total collapse of the cooling channels in the inside of the cooling structure 40, even if larger swelling forces/displacements than designed for occur.

Thus, the end plates 24a, 24b may, due to the cooling plates 42 with their internal compression structures 50, exert basically a constant compression force onto the cell stack 10 independent of the age of the battery cells 12. Therefore, production tolerances as well as swelling forces/displacements of the battery cells 12 over the lifetime of the battery system 100 may be effectively compensated without an increase in pressure. The compression structures 50 are designed such that the low and high SOC stay in the flat plateau area of the curve as shown in FIG. 8. The flat plateau may be provided by the plastic deformation of the connection portions 56 of the compression structures 50 of the cooling plates 42, as explained. Thus, the cell stack 10 may be kept in the optimum range of pressure for peak performance ensuring reliable and safe operation through all its life cycle until end of life.

### Reference signs

- 10: cell stack
- 12: battery cells
- 13: venting openings
- 14: cell terminals
- 20: cell stack frame
- 22: side wall elements
- 24a: first end plate
- 24b: second end plate
- 25: through-hole
- 40: cooling structure
- 42: cooling plates
- 42a: plate element
- 42b: plate element
- 44: connecting elements
- 46: fluid inlet element
- 46a: distancing portion
- 46b: inlet
- 47: fluid outlet element
- 47a: distancing portion
- 48: cooling chambers
- 50: compression structure
- 52: V-shaped spring
- 52a: leg of V-shaped spring
- 52b: leg of V-shaped spring
- 54: V-shaped spring
- 54a: leg of V-shaped spring
- 54b: leg of V-shaped spring
- 56: connection portions
- 58: spring plate
- 100: battery system
- S: stacking direction
- P: main extension plane

## Claims

1. A battery system (100), comprising:
a plurality of battery cells (12) arranged to form a cell stack (10),
a cell stack frame (20) accommodating the cell stack (10) and exerting a pressure onto the cell stack (10), and
a cooling structure (40) comprising a plurality of cooling plates (42) arranged between the battery cells (12), wherein each cooling plate (42) comprises:
two plate elements (42a, 42b) with a cooling chamber (48) in-between for the feed-through of coolant, and
a compression structure (50) arranged inside the cooling chamber (48), wherein the compression structure (50) comprises one or more spring elements (52, 54) interconnecting the plate elements (42a, 42b), the spring elements (52, 54) having a corrugated shape, the spring elements (52, 54) being adapted to be elastically deformed when receiving compression forces acting on the plate elements (42a, 42b), and the compression structure (50) further comprising connection portions (56) connecting the spring elements (52, 54) to the plate elements (42a, 42b), the connection portions (56) being adapted to be plastically deformed when receiving compression forces acting on the plate elements (42a, 42b).

2. The battery system (100) as claimed in claim 1, wherein the cooling structure (40) further includes curved connecting elements (44) extending about end sides of the battery cells (12) and interconnecting neighboring cooling plates (42) of the plurality of cooling plates (42) such that the cooling structure (40) has a meandering form.

3. The battery system (100) as claimed in any one of the preceding claims, wherein the cell stack frame (20) comprises an end plate (24a, 24b) exerting pressure onto the cell stack (10).

4. The battery system (100) as claimed in any one of the preceding claims, wherein the cooling structure (40) further comprises a fluid inlet element (46) arranged at a first end of the cell stack (10) and a fluid outlet element (47) arranged a second end of the cell stack (10), wherein the cooling structure (40) is adapted for the feed-through of the coolant from the fluid inlet element (46), through the cooling chambers (48) of the cooling plates (42) and out of the fluid outlet element (47).

5. The battery system (100) as claimed in any one of the preceding claims, wherein the cooling plates (42) are extruded plates and/or the cooling plates (42) are made of aluminum.

6. The battery system (100) as claimed in any one of the preceding claims, wherein the spring elements (52, 54) comprise V-shaped springs (52, 54) interconnecting the plate elements (42a, 42b), the V-shaped springs (52, 54) each comprising two legs (52a, 52b, 54a, 54b) with a corrugated shape, the legs (52a, 52b, 54a, 54b) being adapted to be elastically deformed when receiving compression forces acting on the plate elements (42a, 42b), wherein the connection portions (56) connect the legs (52a, 52b, 54a, 54b) to the plate elements (42a, 42b).

7. The battery system (100) as claimed in claim 6, wherein the V-shaped springs (52, 54) are arranged one after the other in the same orientation.

8. The battery system (100) as claimed in claim 6 or 7, wherein the V-shaped springs (52, 54) are arranged in pairs of two with their open ends against each other.

9. The battery system (100) as claimed in any one of claims 6 to 8, wherein the corrugated shape of the V-shaped springs (52, 54) is configured such that when the cooling plate (42) is fully compressed, the two legs (52a, 52b, 54a, 54b) of the V-shaped springs (52, 54) are nested inside each other while cooling channels through the cooling chamber (48) are partially maintained inside the compressed cooling plate (42).

10. The battery system (100) as claimed in any one of the preceding claims, wherein the spring elements (52, 54) comprise a spring plate (58) having a corrugated shape, wherein a main extension plane (P) of the spring plate (58) extends substantially parallel to the plate elements (42a, 42b).

11. The battery system (100) as claimed in any one of the preceding claims, wherein the plate elements (42a, 42b) are configured to be bulged outwards in a relaxed state and flattened in a compressed state to homogenize the pressure of the plate elements (42a, 42b) onto adjacent battery cells.

12. An electric vehicle comprising the battery system (100) as claimed in any one of the preceding claims.
